# EUROPEAN PATENT APPLICATION

(11) **EP 4 725 808 A1**
(43) Date of publication of application: **15.04.2026**
(21) Application number: 25208040.3
(22) Date of filing: 10.10.2025
(51) Int. Cl.: B62D 35/00, B62D 35/02

(54) **MOTOR VEHICLE WITH CHANNELLING OF AN AERODYNAMIC FLOW OVER THE WHEEL WELL TO IMPROVE THE EFFICIENCY OF A MOTOR VEHICLE DIFFUSER**

(30) Priority: 14.10.2024 IT 202400022842
(71) Applicant: FERRARI S.p.A., 41100 Modena (IT)
(72) Inventor: SEDDA, Salvatore, 41100 MODENA (IT); BIANCALANA, Matteo, 41100 MODENA (IT)
(74) Representative: Studio Torta S.p.A.

(57) **Abstract**

A motor vehicle (1) includes a rear wheel (18) and a body (2) having a floor (4) arranged to face a ground during use, the floor (4) having a rear end portion defining a diffuser (5) to expand an underlying aerodynamic flow, thereby generating downforce, and a rear wheel arch (14) defining an underlying wheel well (16) housing the rear wheel (18), characterized by comprising a duct (24) extending through the body (2) from an inlet (28) located in a front position with respect to the wheel well (16) to an end section (25) having an opening (26) discharging onto the wheel well (16) between the rear wheel (18) and an intermediate portion of the diffuser (5) according to a pitch axis (Y) of the motor vehicle (1).

## Description

### CROSS-REFERENCE TO RELATED APPLICATIONS

This patent application claims priority from Italian patent application no. 102024000022842 filed on October 14, 2024, the entire disclosure of which is incorporated herein by reference.

### TECHNICAL FIELD

The invention relates to a motor vehicle and, more in particular, to a sports car, more in particular to a high performance sports car.

### PRIOR ART

As it is known, some motor vehicles are provided with a floor with a diffuser to generate downforce at the rear.

The diffuser typically is a rear end portion of the floor arranged as an upwardly inclined ramp and shaped to cause an expansion of an aerodynamic flow flowing under the motor vehicle during use, more precisely between the floor and the road travelled by the motor vehicle.

The expansion of the aerodynamic flow causes a local pressure drop at the diffuser, which corresponds to downforce on the motor vehicle.

On the other hand, the local pressure drop can attract lateral aerodynamic flows with low energy coming from the rear wheel wells, which, by channelling into the diffuser, lead to a decrease in the efficiency of the diffuser itself.

This represents a drawback because of a potential non-negligible deterioration in the performance of the aerodynamics of the motor vehicle.

Therefore, the drawback set forth above needs to be limited or even eliminated.

An object of the invention is to fulfil the need discussed above, preferably in a simple and repeatable fashion.

### DESCRIPTION OF THE INVENTION

Said object is reached by a motor vehicle as defined in claim 1.

The dependent claims define special embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein:
- figure 1 is a perspective of a motor vehicle according to the invention,

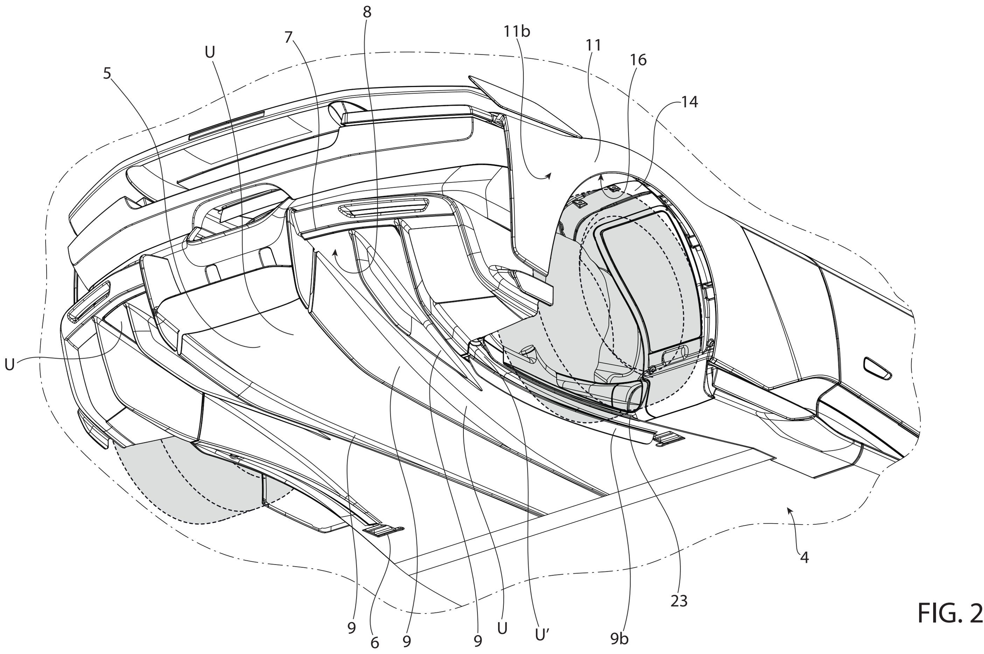

- figure 2 is a perspective view, on a larger scale, of a rear portion of the motor vehicle from the bottom,

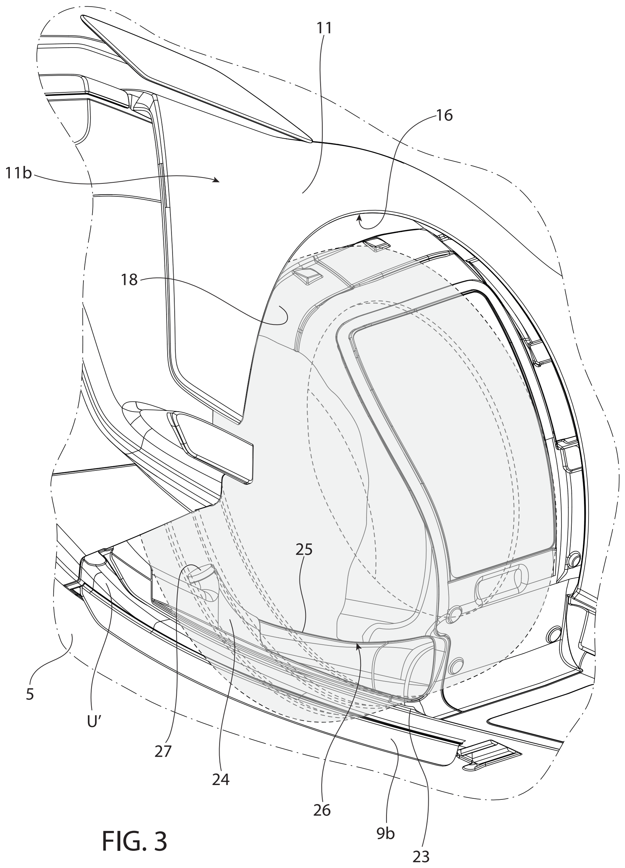

- figure 3 is an enlargement of a detail of figure 2,

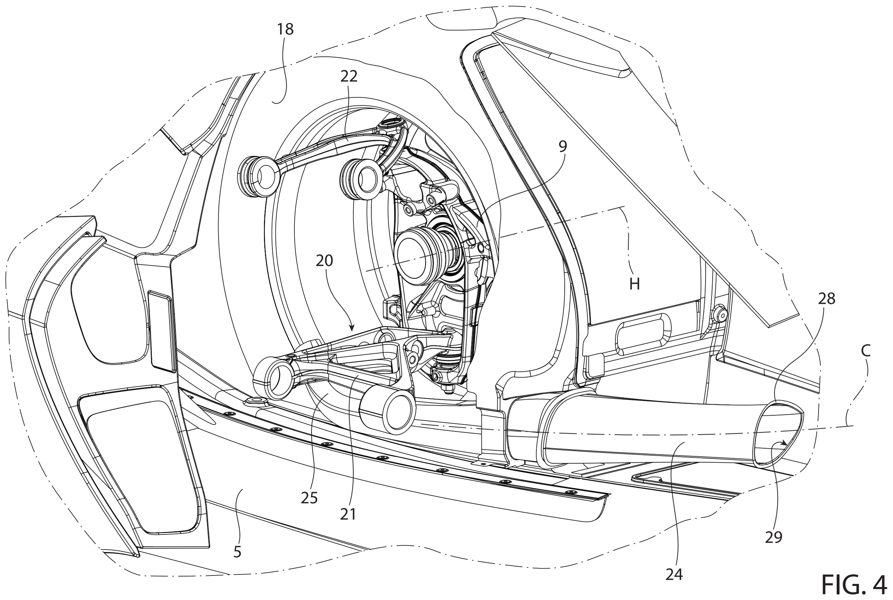

- figure 4 is a perspective view of the detail of figure 3 according to a point of view from inside the motor vehicle,

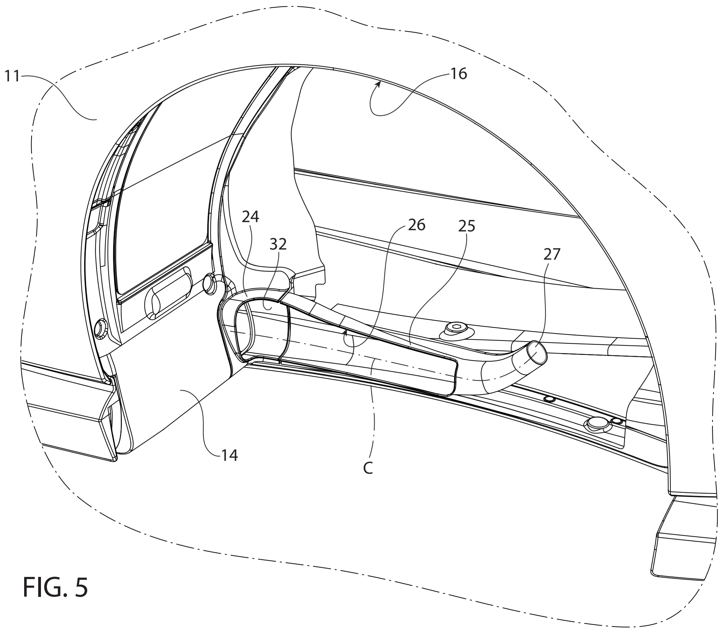

- figure 5 is a perspective view of the detail of figure 3, with parts removed for greater clarity, and
- figure 6 is a section of a specific area of figure 5 according to a section plane orthogonal to a travel direction of the motor vehicle.

### EMBODIMENTS OF THE INVENTION

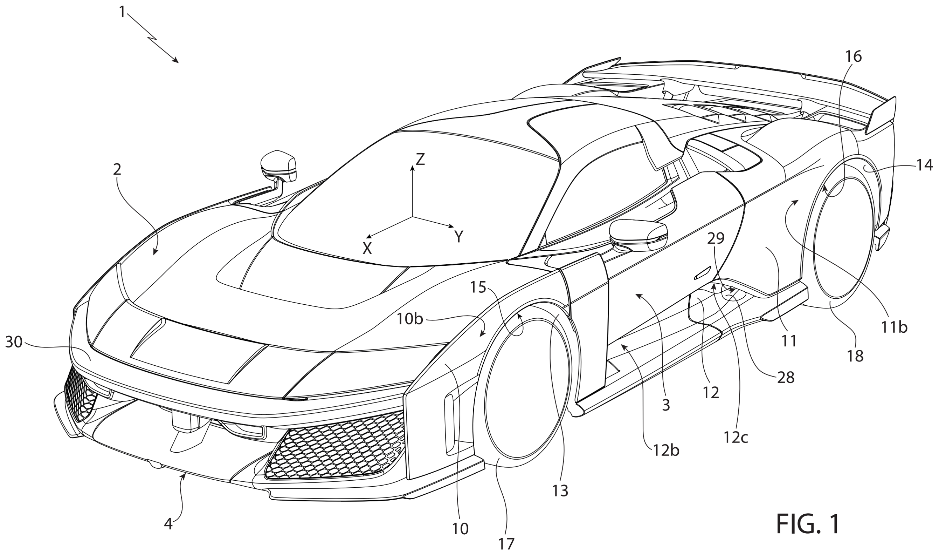

In figure 1, reference number 1 is used to indicate, as a whole, a motor vehicle.

The motor vehicle 1 has a body reference system defined by a roll axis X, a pitch axis Y and a yaw axis Z.

The roll axis X is a longitudinal axis of the motor vehicle 1 and is oriented in the same way as a travel direction of the motor vehicle 1 on the ground during use.

The pitch axis Y is horizontal and orthogonal to the roll axis X, whereby the yaw axis Z is orthogonal to the axes X, Y and has at least one vertical component, i.e. oriented contrary to the earth's gravity force.

The motor vehicle 1 has a body 2, which typically includes a frame defining a skeleton of the motor vehicle 1 and a shell carried by the frame and comprising a plurality of panels defining the outer surfaces of the motor vehicle 1.

The body 2 has a front area and a rear area according to the travel direction or roll axis X, as well as two sidewalls 3 (only one of them being shown in the perspective of figure 1) opposite one another according to the pitch axis Y. The sidewalls 3 define the lateral ends of the motor vehicle 1, namely they delimit the width of the motor vehicle 1 according to the pitch axis Y.

Preferably, the motor vehicle 1 is symmetrical with respect to a plane containing the roll axis X and orthogonal to the pitch axis Y. Therefore, the sidewalls 3 are identical to one another and only one of them will be described more in detail below.

Hereinafter, expressions such as front, rear, in front of, behind, above, under, at the top, at the bottom and the like refer to the travel direction or roll axis X of the motor vehicle, as well as to the yaw axis Z oriented in the opposite way with respect to the direction of the force of gravity.

The body 2 further comprises a floor or floorboard 4 defining a lower end of the motor vehicle 1.

The floor 4 defines a lower surface facing, in use, the ground. In this way, the movement of the motor vehicle 1 along the roll axis X produces an aerodynamic flow that is at least partly channelled at the front between the ground and the floor 4, namely under the floor 4, interacting with the latter.

At or in the rear area of the motor vehicle 1, the floor 4 comprises a rear end portion defining a diffuser 5 configured to expand the underlying aerodynamic flow (under the floor 4 or the diffuser 5 itself), thereby generating downforce on the motor vehicle 1.

The diffuser 5 extends longitudinally (according to the roll axis X) from a front end 6 to a rear end 7, in particular defining the rear end of the floor 4. The rear end 7 is located higher than the front end 6 according to the yaw axis Z, in particular with respect to the ground.

Therefore, the diffuser 5 defines an upwardly inclined ramp 8 with an increasing height from the front end 6 to the rear end 7. The ramp 8 is defined by a portion of the lower surface of the diffuser 5 or, more generally, of the floor 4.

More in detail, the front end 6 is narrower according to the pitch axis Y than the rear end 7, which is therefore wider.

The lower surface of the ramp 8 of the diffuser 5 is part of the lower surface of the floor 4 and, therefore, faces the ground during the use of the motor vehicle 1.

Preferably, the diffuser 5 comprises a plurality of dividing partitions 9 projecting downwards from the ramp 8 and defining, on the ramp 8, a plurality of diverging nozzles U along the roll axis X (from the front to the rear) to enhance the expansion of the aerodynamic flow under the diffuser 5.

The sidewall 3 comprises a front fender 10 and a rear fender 11 defining respective outer surfaces 10b, 11b of the motor vehicle 1.

Optionally, the sidewall 3 also comprises a wall or panel 12 defining, in turn, an outer surface 12b of the motor vehicle and partially laterally covered by the fender 11. Therefore, more in detail, the wall 12 has a wall portion defining the surface 12b and, therefore, exposed to the outside, as well as a further wall portion 12c laterally covered by the fender 11.

In other words, the wall portion 12c is part of the wall 12 and is located further inward than the fender 11 according to the pitch axis Y.

The body 2 further comprises, at the sidewall 3, a front wheel arch 13 and a rear wheel arch 14, for example forming part of the fender 10 and of the fender 11, respectively.

The wheel arches 13, 14 partially surround respective wheel wells 15, 16, more precisely from above.

The motor vehicle 1 comprises a front wheel 17 and a rear wheel 18 housed in the wheel wells 15, 16, respectively.

The motor vehicle 1 further comprises a hub carrier 19, which carries the wheel 16 in a rotary manner around a wheel axis H, more precisely forming part of a plane orthogonal to the yaw axis Z.

The body 2 is suspended with respect to the hub carrier 19 by means of a suspension 20 of the motor vehicle 1.

In particular, the suspension 20 comprises at least a lower arm 21 and preferably an upper arm 22. The arm 21 and the arm 22 (if present) are coupled to the hub carrier 19 at one end and to the body 2 (in particular to the frame, in a way that is not shown herein) at the other end.

More in particular, the arm 21 is the lowest component of the suspension 20, namely the component located at the lowest height, for example with respect to the ground, according to the axis Z.

Specifically, the front end 6 of the diffuser 5 is located in a front position with respect to the wheel arch 14 or the wheel well 16. Alternatively or in addition, the rear end 7 of the diffuser 5 is located in a rear position with respect to the wheel arch 14 or the wheel well 16.

Preferably, the diffuser 5 or, more generally, the floor 4 has a side edge 23 according to the axis Y at the wheel well 16.

Alternatively or in addition, the diffuser 5 is located laterally further inward than the wheel 18 according to the axis Y.

Alternatively or in addition, the diffuser 5 is distinct from the wheel arch 14.

One of the nozzles U, in particular a nozzle U', is defined according to the pitch axis Y between the side edge 23 and one of the dividing partitions 9 (in particular, the partition 9b, which is more precisely the first of the dividing partitions 9 that a segment S of the ramp 8 would encounter extending along the pitch axis Y from the side edge 23).

The motor vehicle 1 comprises a duct 24 (at least partly) extending through the body 2 or formed by the body 2.

The duct 24 extends from an inlet 28 to an end section 25 opening into the wheel well 16, namely with an opening 26 discharging onto the wheel well 16, between the wheel 18 and the diffuser 5 or, in other words, between the wheel 18 and an intermediate portion or zone of the diffuser 5 according to the pitch axis Y (indeed, the side edge 23 could also be located between the opening 26 and the wheel 18 according to the pitch axis Y, but, anyway, the opening 26 discharges onto a zone of the wheel well 16 having at least a portion between the wheel 18 and the diffuser 5, namely it discharges onto a portion of the wheel well 16 that is internal with respect to the wheel 18 according to the pitch axis Y).

More in detail, the inlet 28 is located on the body 2 so as to be exposed, during the use of the motor vehicle 1, to a portion of the aerodynamic flow produced by the movement of the motor vehicle 1, wherein the latter portion of the aerodynamic flow has a higher pressure than the air pressure on the wheel well 16. Therefore, in other words, the inlet 28 is located on the body 2 in such a way that an aerodynamic pressure at the inlet 28 is greater than the air pressure on the wheel well 16 during the movement of the motor vehicle 1.

In the embodiment shown, although in a non-limiting manner, the inlet 28 is located at the front, namely in a front position, with respect to the wheel well 16. On the other hand, the inlet 28 could be arranged differently; for example, according to embodiments which are not shown herein, the inlet 28 could be located on a front bumper 30 of the body 2 (and, therefore, still at the front with respect to the wheel well 16) or behind the wheel well 16, for example but not necessarily, at a rear bumper and/or at an aerodynamic wing (specifically, a rear aerodynamic wing) configured to cause an increase in the pressure of the portion of the aerodynamic flow at the inlet 28.

The duct 24 longitudinally extends along an axis C, which is preferably curved.

Alternatively or in addition, the duct 24 longitudinally extends along the axis C from the inlet 28 to the end section 25.

The opening 26 opens the end section 25 on the side, namely according to the pitch axis Y or transversely with respect to the axis C, towards the wheel well 16 or the wheel 18 or, more precisely, an inner side of the wheel 18. In other words, the opening 26 laterally faces the wheel well 16 or, more precisely, the wheel 18 or, even more precisely, an inner side of the wheel 18.

In detail, the end section 25 longitudinally ends (according to the axis C) with a blind end 27, namely a capped or closed end, in particular longitudinally ending past the opening 26 (at the back thereof), despite being laterally open through the latter.

Preferably, the inlet 28 defines an opening 29, more preferably at the front with respect to the roll axis X or to the travel direction of the motor vehicle 1. In other words, as shown for example in figure 1, the opening 29 faces a front of the motor vehicle or an external area of the motor vehicle 1 according to the roll axis X.

In practice, a part of the aerodynamic flow that develops along the roll axis X during the use of the motor vehicle 1 is channelled into the duct 24 through the opening 29 or the inlet 28, in particular directly (i.e. without deflections), and then continues to flow in the duct 24 along the axis C, until it exits through the opening 26 on the wheel well 16 at an inner side of the wheel 18 according to the pitch axis Y.

The inlet 28 (or the opening 29) is preferably located or placed on the sidewall 3 and more preferably extends between the wall 12 and the fender 11. More generally, the duct 24 could have a section located in front of the wheel well 16 and extending along the axis C between the fender 11 and the wall 12 according to the pitch axis Y. This latter optional aspect could apply, for example, even if the inlet 28 were not located on the sidewall 3, but elsewhere, for example on a rear bumper of the body 2.

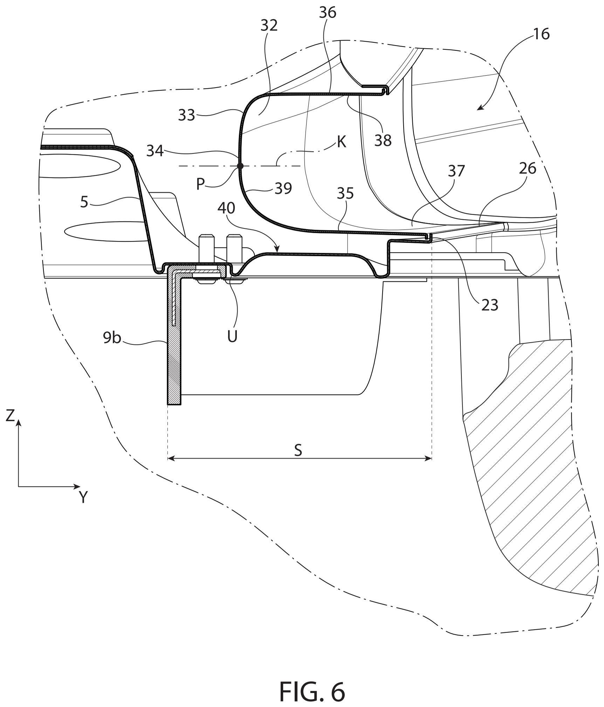

Figure 6 shows a cross section (in particular, with respect to the axis C or on a plane orthogonal to the axis X) of the end section 25 at the opening 26.

The end section 25 is conveniently delimited at the opening 26 by a duct wall 32 that is part of the duct 24.

Alternatively or in addition, the duct wall 32 is a portion of an open pipe, in particular opened laterally, into the wheel well 16 by means of the opening 26 and delimiting the end section 25. Alternatively or in addition, the opening 26 faces the wheel 8.

The duct wall 32 has a cross section (as shown in figure 6), namely a section with respect to a plane orthogonal to the axis X or transversal to the axis C, with a profile 33 that is concave towards the wheel well 16. For example, the profile 33 has a concavity facing laterally or, according to the axis Y, the wheel well 16.

More in particular, the profile 33 is C-shaped, U-shaped or omega-shaped. In other words, the profile 33 comprises a segment 34 facing the wheel well 16 and two other segments 35, 36 that extend transversely with respect to the two opposite ends of the segment 34 towards the wheel well 16. The segment 35 is located under the segment 36 according to the yaw axis Z.

For example, the segment 34 faces the wheel well 16 according to the axis Y.

Preferably, the profile 33 or, more precisely, the segment 34 has a minimum P according to an axis K parallel to the pitch axis Y and oriented towards the outside of the motor vehicle 1. Herein, the line tangent to the profile 33 or, more precisely, to the segment 34 at the minimum P is parallel to the axis Z or orthogonal to the axis K.

The duct wall 32 comprises, for example, a lower portion 37, in particular comprising or corresponding to the segment 35. For example, the duct wall 32 comprises an upper portion 38, in particular facing the lower portion 37, for example comprising or corresponding to the segment 36.

Preferably, the upper portion 38 and the lower portion 37 are joined to one another by means of an intermediate portion 39 of the duct wall 32. The intermediate portion 39, in particular, comprises or corresponds to the segment 34 and, for example, faces the wheel well 16 through the opening 26. For example, the intermediate portion 39 faces the wheel well 16 according to the axis Y.

In particular, the upper portion 38 and/or the lower portion 37 extend transversely with respect to the intermediate portion 39, which is located, more in particular, between the upper portion 38 and the lower portion 37 according to the yaw axis Z.

Preferably, the lower portion 37 is attached above the diffuser 5 or the floor 4. More precisely, the lower portion 37 is attached on an upper face 40 of the diffuser 5 or of the floor 4.

More in particular, the lower portion 37 is directly attached to the diffuser 5 or to the floor 4, for example as it forms one single continuous piece with the diffuser 5 or with the floor 4, whereby the duct wall 32 extends immediately above the diffuser 5 or the floor 4.

For example, the duct wall 32 extends above, in particular immediately above the nozzle U'. In detail, the end section 25 conceptually communicates with the nozzle U' through the opening 26 and the wheel well 16.

Preferably, the lower portion 37 is attached to the diffuser 5 or to the floor 4 at the side edge 23. For example, the side edge 23 can embrace an edge of the lower portion 37, thus determining the mutual attachment. Alternatively, the side edge 23 can form one single piece in continuity with the lower portion 37.

In other words, the opening 26 is located at the side edge 23 or, more precisely, extends flush with the side edge 23.

Conveniently, the opening 26 is arranged under or below the lower arm 21 of the suspension 20.

In other words, the opening 26 or the end section 25 or the duct wall 32 are located between the lower arm 21 and the ground or the diffuser 5 or the floor 4 according to the yaw axis Z.

Owing to the above, the advantages of the motor vehicle 1 according to the invention are evident.

The duct 24 leads a rapid aerodynamic flow at the wheel well 16 next to the diffuser 5 according to the pitch axis Y. The turbulence generated at the wheel well 16, within the wheel 18, ensures that the diffuser 5 is protected from lateral aerodynamic disturbances, thus preserving the performance and efficiency of the diffuser 5 at optimal levels.

Finally, the motor vehicle 1 according to the invention can be subjected to changes and variants, which, though, do not go beyond the scope of protection set forth in the appended claims.

In particular, the number, the shape and the arrangement of each of the components described and shown herein could be different, with particular reference to the shape and/or the overall arrangement of the duct 24, as well as the shape of the duct wall 32 and of the components thereof.

## Claims

1. Motor vehicle (1) comprising a rear wheel (18) and a body (2) having
- a floor (4) arranged to face a ground during use, the floor (4) having a rear end portion defining a diffuser (5) to expand an underlying aerodynamic flow, thereby generating downforce, and
- a rear wheel arch (14) defining an underlying wheel well (16) housing the rear wheel (18),
**characterized by** comprising a duct (24) extending through the body (2) from an inlet (28) to an end section (25) having an opening (26) discharging onto the wheel well (16) between the rear wheel (18) and an intermediate portion of the diffuser (5) according to a pitch axis (Y) of the motor vehicle (1).

2. The motor vehicle according to claim 1, wherein the inlet (28) of the duct (24) is located on a sidewall (3) of the body (2).

3. The motor vehicle according to claim 1 or 2, wherein the sidewall (3) comprises a fender (11), whereby the duct (24) has a section disposed anteriorly with respect to the wheel well (16) and extending along a longitudinal axis (C) of the duct (24) between the fender (11) and an inner wall portion (12c) of the sidewall (3) according to the pitch axis (Y), the wall portion (12c) being part of a wall (12), the fender and said wall (11, 12) defining respective external surfaces (11b, 12b) of the motor vehicle (1).

4. The motor vehicle according to any one of the preceding claims, wherein the end section (25) is bounded at the opening (26) by a duct wall (32) having a cross-section with a profile (33) concave toward the wheel well (16).

5. The motor vehicle according to claim 4, wherein the duct wall (32) comprises a lower portion (37) attached above the diffuser (5).

6. The motor vehicle according to claim 5, wherein the lower portion (37) is directly attached to the diffuser (5), whereby the duct wall (32) extends immediately above the diffuser (5).

7. The motor vehicle according to claim 5 or 6, wherein the lower portion (37) is attached to the diffuser (5) at a side edge (32) of the diffuser (5) according to the pitch axis (Y).

8. The motor vehicle according to any one of claims 4 to 7, wherein the profile (33) has a minimum (P) according to an axis (K) parallel to the pitch axis (Y) and oriented outwardly of the motor vehicle (1), wherein the straight line tangent to the profile (33) at the minimum (P) is parallel to a yaw axis (Z) of the motor vehicle (1).

9. The motor vehicle according to any one of the preceding claims, comprising a hub carrier (19) carrying the wheel (18) in a rotatable manner about a wheel axis and a suspension (20) configured to suspend the body (2) on the hub carrier (19), the suspension (20) comprising a lower arm (21) coupled to the body (2) and the hub carrier (19), wherein the opening (26) is arranged inferiorly to the lower arm (21) of the suspension (20).

10. The motor vehicle according to any one of the preceding claims, wherein the end section (25) longitudinally ends with a blind end (27).

11. The motor vehicle according to claim 10, wherein the end section (25) longitudinally ends with the blind end (27) past the opening (26) despite being laterally open through the opening (26).
